# EUROPEAN PATENT SPECIFICATION

(11) **EP 3 290 232 B1**
(45) Date of publication and mention of the grant of the patent: **05.02.2020**
(21) Application number: 17188429.9
(22) Date of filing: 29.08.2017
(51) Int. Cl.: B60C 9/20, B60C 9/22

(54) **TIRE WITH LOW WEIGHT AND HIGH BURST STRENGTH**
REIFEN MIT GERINGEM GEWICHT UND HOHER BERSTFESTIGKEIT
PNEU AYANT UN FAIBLE POIDS ET UNE GRANDE RÉSISTANCE À LA CREVAISON

(30) Priority: 31.08.2016 US 201662381604 P
(43) Date of publication of application: 07.03.2018
(73) Proprietor: The Goodyear Tire & Rubber Company, Akron, OH 44316 (US)
(72) Inventor: KMIECIK, Frank Anthony, Akron, OH Ohio 44313 (US); SLIVKA, John Joseph, Danville, VA Virginia 24541 (US)
(74) Representative: Kutsch, Bernd

(56) References cited:
- EP-A1- 0 463 273
- WO-A2-2014/135995
- JP-A- 2010 208 090
- US-A1- 2017 057 291

## Description

### Field of the Invention

This invention relates to pneumatic tires having a carcass and a belt reinforcing structure, more particularly to high speed heavy load tires such as those used on aircraft.

### Background of the Invention

Pneumatic tires for high speed applications experience a high degree of flexure in the crown area of the tire as the tire enters and leaves the area of the footprint. This problem is particularly exacerbated on aircraft tires wherein the tires can reach speed of over 320 km/h at takeoff and landing.

When a tire spins at very high speeds the crown area tends to grow in dimension due to the high angular accelerations and velocity, tending to pull the tread area radially outwardly. Counteracting these forces is the load of the vehicle which is only supported in the small area of the tire known as the footprint area.

Current tire design drivers are an aircraft tire capable of high speed, high load and with reduced weight. It is known in the prior art to use zigzag belt layers in aircraft tires, such as disclosed in US-A-5,427,167. Zigzag belt layers have the advantage of eliminating cut belt edges at the outer lateral edge of the belt package. The inherent flexibility of the zigzag belt layers also help improve cornering forces. However, a tire designed with zigzag belt layers may result in too many layers at the belt edges which may reduce durability. Further, there is generally a tradeoff between load capacity and weight. Thus, an improved aircraft tire is needed, which is capable of meeting high speed and high load requirements and has a relatively low weight. In particular, there is a need for such a tire with improved burst strength.

JP-A-2010-208090 describes a pneumatic tire in accordance with the preamble of claim 1.

WO-A-2014/135995 describes a process for building tires and a respective tire. The tire may be built using strip-like elements comprising first cords and second cords. The first and second cords are manufactured with a material selected from the group comprising rayon, nylon, polyester and hybrid materials composed of different materials such as nylon/aramid.

### Definitions

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Cord" means one of the reinforcement strands which the plies in the tire comprise.

"Equatorial plane (EP)" means the plane perpendicular to the tire's axis of rotation and passing through the center of its tread.

"Modulus of elasticity" of a cord at a given strain or stress means the extension secant modulus calculated at the given strain or stress. A high elastic modulus means a secant elastic modulus over 1000cN/tex and a low elastic modulus means a secant modulus under 600 cN/tex.

"Ply" means a continuous layer of rubber-coated parallel cords.

"Radial" and "radially" mean directions radially toward or away from the axis of rotation of the tire.

"Radial-ply tire" means a belted or circumferentially-restricted pneumatic tire in which the ply cords which extend from bead to bead are laid at cord angles between 65° and 90° with respect to the equatorial plane of the tire.

"Section width" is the distance between a tire's sidewalls measured at the widest part of the tire when inflated to rated pressure and not under load.

"Tangent modulus of elasticity" of a cord at a given strain or stress means the extension tangent modulus of the cord. At a given stress or strain, the tangent modulus of elasticity is the value of the slope of the tangent to the stress strain curve and is determined in accordance with ASTM E111-04 entitled "Standard Test Method for Young's Modulus, Tangent Modulus, and Chord Modulus."

"Zigzag belt reinforcing structure" means at least two layers of cords or a ribbon of parallel cords preferably having 1 to 20 cords in each ribbon and laid up in an alternating pattern extending preferably at an angle between 1° and 5° or between 5° and 30° between lateral edges of the belt layers.

### Summary of the Invention

The invention relates to a tire in accordance with claim 1.

Dependent claims refer to preferred embodiments of the invention.

Preferably, the diameter of the first reinforcement cords is at least 50%, more preferably at least 100% larger than the diameter of the second reinforcement cords.

One or more embodiments of the present invention provide a pneumatic tire comprising a carcass and a belt reinforcing structure, the belt reinforcing structure being formed by winding a strip of reinforcement cords, wherein the strip of reinforcement cords is formed from a plurality of first reinforcement cords and a second reinforcement cord located on each lateral end of the strip, wherein the strip of reinforcement cords has outer lateral ends that are triangular in shape.

One or more embodiments of the present invention provide a pneumatic tire comprising a carcass and a belt reinforcing structure, the belt reinforcing structure being formed by winding a strip of reinforcement cords, wherein the strip of reinforcement cords is formed from a plurality of first reinforcement cords and a second reinforcement cord located on each lateral end of the strip, wherein the strip of reinforcement cords has outer lateral ends that are triangular in shape, wherein the first reinforcement cord is formed of a higher modulus material than the second reinforcement cord.

One or more embodiments of the present invention provide a pneumatic tire comprising a carcass and a belt reinforcing structure, the belt reinforcing structure being formed by winding a strip of reinforcement cords, wherein the strip of reinforcement cords is formed from a plurality of first reinforcement cords and a second reinforcement cord located on each lateral end of the strip, wherein the strip of reinforcement cords has outer lateral ends that are triangular in shape, wherein the first reinforcement cord has a larger diameter than the second reinforcement cord.

One or more embodiments of the present invention provide a pneumatic tire comprising a carcass and a belt reinforcing structure, the belt reinforcing structure being formed by winding a strip of reinforcement cords, wherein the strip of reinforcement cords is formed from a plurality of first reinforcement cords and a second reinforcement cord located on each lateral end of the strip, wherein the strip of reinforcement cords has outer lateral ends that are triangular in shape, wherein the first reinforcement cord has a tangent modulus at 80% of break greater than 5000 MPa.

One or more embodiments of the present invention provide a pneumatic tire comprising a carcass and a belt reinforcing structure, the belt reinforcing structure being formed by winding a strip of reinforcement cords, wherein the strip of reinforcement cords is formed from a plurality of first reinforcement cords and a second reinforcement cord located on each lateral end of the strip, wherein the strip of reinforcement cords has outer lateral ends that are triangular in shape, wherein the second reinforcement cord has a tangent modulus at 80% of break less than 5000 MPa.

One or more embodiments of the present invention provide a pneumatic tire comprising a carcass and a belt reinforcing structure, the belt reinforcing structure being formed by winding a strip of reinforcement cords, wherein the strip of reinforcement cords is formed from a plurality of first reinforcement cords and a second reinforcement cord located on each lateral end of the strip, wherein the strip of reinforcement cords has outer lateral ends that are triangular in shape, wherein the first reinforcement cord has a tangent modulus at 80% of break less than 35000 MPa.

One or more embodiments of the present invention provide a pneumatic tire comprising a carcass and a belt reinforcing structure, the belt reinforcing structure being formed by winding a strip of reinforcement cords, wherein the strip of reinforcement cords is formed from a plurality of first reinforcement cords and a second reinforcement cord located on each lateral end of the strip, wherein the strip of reinforcement cords has outer lateral ends that are triangular in shape, wherein there are at least two second reinforcement cords in a strip, and each second reinforcement cord is located at each lateral end of the strip.

One or more embodiments of the present invention provide a pneumatic tire comprising a carcass and a belt reinforcing structure, the belt reinforcing structure being formed by winding a strip of reinforcement cords, wherein the strip of reinforcement cords is formed from a plurality of first reinforcement cords and a second reinforcement cord located on each lateral end of the strip, wherein the strip of reinforcement cords has outer lateral ends that are triangular in shape, wherein the first reinforcement cord is formed of aramid and nylon filaments.

One or more embodiments of the present invention provide a pneumatic tire comprising a carcass and a belt reinforcing structure, the belt reinforcing structure being formed by winding a strip of reinforcement cords, wherein the strip of reinforcement cords is formed from a plurality of first reinforcement cords and a second reinforcement cord located on each lateral end of the strip, wherein the strip of reinforcement cords has outer lateral ends that are triangular in shape, wherein the first reinforcement cord is formed of aramid filaments.

One or more embodiments of the present invention provide a pneumatic tire comprising a carcass and a belt reinforcing structure, the belt reinforcing structure being formed by winding a strip of reinforcement cords, wherein the strip of reinforcement cords is formed from a plurality of first reinforcement cords and a second reinforcement cord located on each lateral end of the strip, wherein the strip of reinforcement cords has outer lateral ends that are triangular in shape, wherein the second reinforcement cord is formed of nylon filaments.

One or more embodiments of the present invention provide a pneumatic tire comprising a carcass and a belt reinforcing structure, the belt reinforcing structure being formed by winding a strip of reinforcement cords, wherein the strip of reinforcement cords is formed from a plurality of first reinforcement cords and a second reinforcement cord located on each lateral end of the strip, wherein the strip of reinforcement cords has outer lateral ends that are triangular in shape, wherein the second reinforcement cord is formed of nylon filaments having a 840/2 Denier.

One or more embodiments of the present invention provide a pneumatic tire comprising a carcass and a belt reinforcing structure, the belt reinforcing structure being formed by winding a strip of reinforcement cords, wherein the strip of reinforcement cords is formed from a plurality of first reinforcement cords and a second reinforcement cord located on each lateral end of the strip, wherein the strip of reinforcement cords has outer lateral ends that are triangular in shape, wherein the strip has at least 9 reinforcement cords.

One or more embodiments of the present invention provide a pneumatic tire comprising a carcass and a belt reinforcing structure, the belt reinforcing structure being formed by winding a strip of reinforcement cords, wherein the strip of reinforcement cords is formed from a plurality of first reinforcement cords and a second reinforcement cord located on each lateral end of the strip, wherein the strip of reinforcement cords has outer lateral ends that are triangular in shape, wherein the strip has a width of 12.7 mm for instance.

One or more embodiments of the present invention provides a pneumatic tire comprising a carcass and a belt reinforcing structure, the belt reinforcing structure being formed by winding a strip of reinforcement cords, wherein the strip of reinforcement cords is formed from a plurality of first reinforcement cords and a second reinforcement cord located on each lateral end of the strip, wherein the strip of reinforcement cords has outer lateral ends that are triangular in shape, wherein the strip has an epi (ends per 2.54 cm) of 16 or 18.

One or more embodiments of the present invention provide a pneumatic tire comprising a carcass and a belt reinforcing structure, the belt reinforcing structure being formed by winding a strip of reinforcement cords, wherein the strip of reinforcement cords is formed from a plurality of first reinforcement cords and a second reinforcement cord located on each lateral end of the strip, wherein the strip of reinforcement cords has outer lateral ends that are triangular in shape, wherein the belt is a zigzag belt or a helically wound belt.

### Brief Description of the Drawings

FIG. 1 is a schematic cross-sectional view of a first embodiment of half of a tire according to the invention;
FIG. 2 is a schematic perspective view of a zigzag belt layer in the middle of the formation;
FIG. 3 is a first embodiment of a belt reinforcement strip;
FIG. 4 is a first embodiment of a zigzag belt layer formed from the reinforcement strip of Fig. 3;
FIG. 5 is a schematically enlarged cross-sectional view of a first embodiment of half of a composite belt package for a tire showing the belt layer configuration;

### Detailed Description of Example Embodiments of the Invention

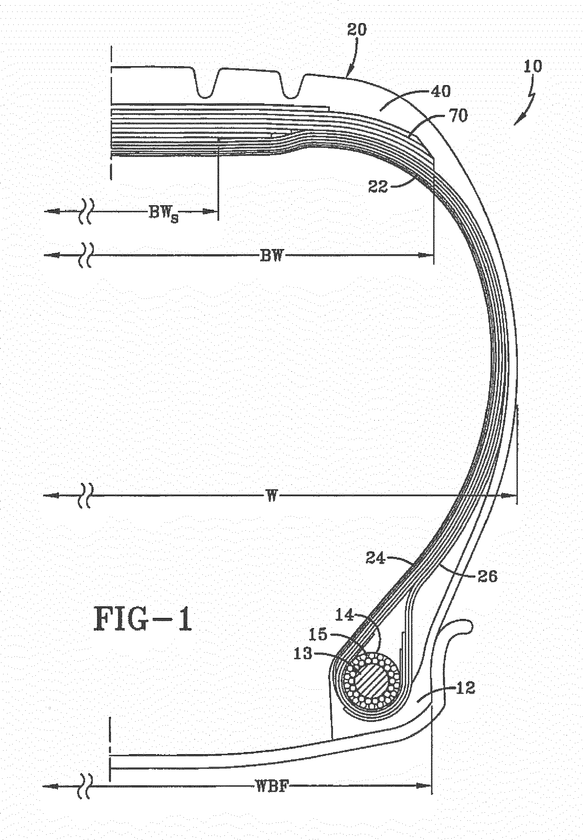

Figure 1 illustrates a cross-sectional view of one half of a radial aircraft tire 10 of the present invention. The tire is preferably symmetrical about the mid-circumferential plane so that only one half is illustrated. As shown, the aircraft tire comprises a pair of bead portions 12 each containing a bead core 14 embedded therein. One example of a bead core suitable for use in an aircraft tire is shown in US-B-6,571,847. The bead core 14 preferably has an aluminum, aluminum alloy or other light weight alloy in the center portion 13 surrounded by a plurality of steel sheath wires 15. A person skilled in the art may appreciate that other bead cores may also be utilized.

The aircraft tire further comprises a sidewall portion extending substantially outward from each of the bead portions 12 in the radial direction of the tire, and a tread portion 20 extending between the radially outer ends of the sidewall portions 16. The tire is shown mounted on a rim flange having a rim flange width extending from one bead to the other bead and indicated as W_{BF} in Figure 1. The section width of the tire is indicated in Figure 1 as W and is the cross-sectional width of the tire at the widest part when inflated to normal pressure and not under load.

Furthermore, the tire 10 is reinforced with a carcass 22 toroidally extending from one of the bead portions 12 to the other bead portion 12. The carcass 22 preferably comprises inner carcass plies 24 and outer carcass plies 26, preferably oriented in the radial direction. Among these carcass plies, typically four inner plies 24 are wound around the bead core 14 from inside of the tire toward outside thereof to form turnup portions, while typically two outer plies 26 are extended downward to the bead core 14 along the outside of the turnup portion of the inner carcass ply 24.

The aircraft may be an H type tire having a ratio of W_{BF}/W in the range of from 0.65 to 0.7, and more preferably in the range of from 0.65 to 0.68.

Each of these carcass plies 24, 26 may comprise any suitable cord, typically nylon cords such as nylon-6,6 cords extending preferably substantially perpendicular to an equatorial plane EP of the tire (i.e. extending in the radial direction of the tire). Preferably, the nylon cords have an 1890 denier/2/2 or 1890 denier/3 construction. One or more of the carcass plies 24, 26 may also comprise an aramid and nylon cord structure, for example, a hybrid cord, a high energy cord or a merged cord. Examples of suitable cords are described in US-A-4,893,665, US-A-4,155,394 or US-B-6,799,618. The ply cords preferably have a percent elongation at break greater than 8% and less than 30%, and more preferably greater than 9% and less than 28%.

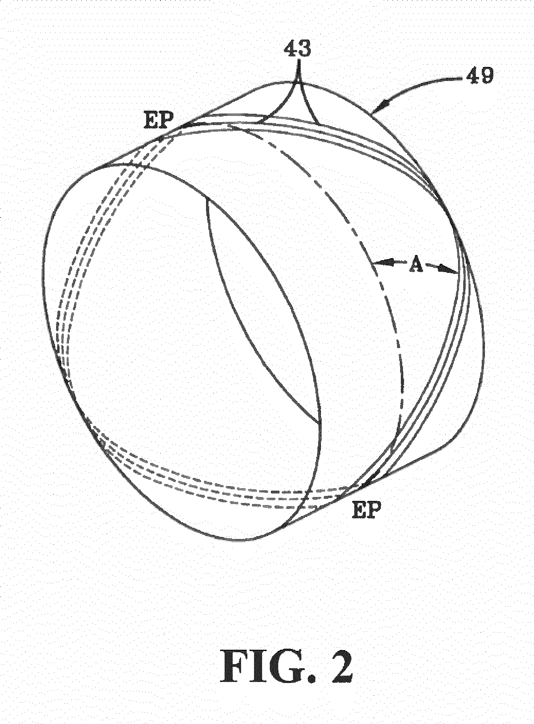

In one embodiment, the aircraft tire 10 further comprises at least one zigzag belt reinforcing structure 70. As shown in Figure 2, the zigzag belt structure of the invention is formed from a rubberized strip of cords 43 that is wound generally in the circumferential direction to extend between alternating lateral edges of a tire building drum or core. The strip is wound along in zigzag path many times while the strip of cords 43 is shifted a desired amount in the axial direction so as preferably not to form a gap between the adjoining strip of cords 43. As a result, the cords extend in the circumferential direction while changing the bending direction at a turnaround point at each lateral drum ends. The cords of the zigzag belt structure cross with each other, typically at a cord angle A in a range of from 5 degrees to 30 degrees with respect to the equatorial plane EP of the tire 10. Each zigzag belt structure typically has at least two layers of cord formed in the zigzag belt structure and has the advantage of no cut ends at the outer lateral ends of the belt structure.

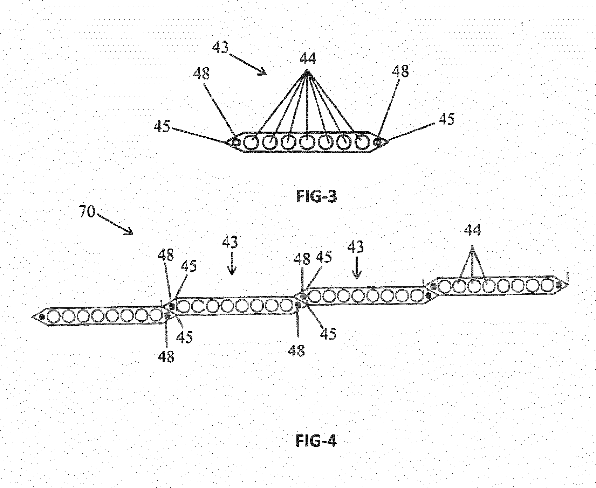

A composite strip of cords 43 of the present invention is shown in Figure 3. The composite strip of cords 43 is formed of two or more parallel first reinforcement cords 44, wherein the first reinforcement cords 44 are the same material. The first reinforcement cords are embedded in rubber. The width of the strip may vary as desired, but it may range from 6.3 mm to 26 mm, and more preferably in the range from 7.6 mm to 15.3 mm. As shown in Figure 3, the lateral edges 45 of the strip of cords 43 are triangular in shape. Embedded in each lateral edge is a second reinforcement cord 48 that preferably has a smaller diameter cord than the first reinforcement cords. Thus, as shown in Figure 4, as the composite strip of cords 43 is wound about the tire building drum, a lateral triangular edge 45 of a first composite strip of cords 43 may be stacked against a lateral triangular edge 45' of the adjacent strip 43' so that the second reinforcement cords 48 are radially stacked adjacent each other.

More preferably, the composite strip of cords 43 is formed of reinforcements made from different materials, so that the first reinforcement cords 44 are formed of a first material, and the second reinforcement cords 48 are formed of a second material, different than the first material. The first reinforcement cords 44 are located axially between the second reinforcement cords 48. Preferably, the first reinforcement cords 44 are formed of a material having a higher modulus than the second reinforcement cords 48. The first reinforcement cords 44 preferably are formed of a material having a tangent modulus at 80% break greater than 4500 MPa, and more preferably in the range of from 10,000 MPa to 31,000 MPa.

The first reinforcement cords 44 may be formed of any higher modulus material such as aramid, POK or a merged or hybrid cord made of aramid and nylon. One example of a suitable cord construction may comprise a composite of aramid and nylon, containing two cords of a polyamide (aramid) with construction of 3300 dtex with a 6.7 twist, and one nylon or nylon 6/6 cord having a construction of 1860 dtex, with a 4.5 twist. The overall merged cable twist is 6.7. A second example of a suitable high modulus cord construction contains three cords of a polyamide with a construction of 1670 denier /1/3 construction.

The second reinforcement cords 48 may be formed of any desired materials preferably having a tangent modulus at 80% break of less than 4500 MPa. It is preferred that the second reinforcement cords 48 be formed of Nylon or Nylon 6/6. It is more preferred that the second reinforcement cords 48 be made of Nylon having an 840/2 denier construction or other cord construction having a smaller diameter than the first reinforcement cords 44.

In the example shown in Figure 3, there are 9 total reinforcement cords arranged in parallel relationship to each other. The composite strip 43 preferably has a 14 mm width. There are 7 first reinforcement cords 44 having an epi (ends per 25.4 mm) of 16, but are not limited to same. The first reinforcement cords 44 are preferably made of a merged cord of nylon and aramid or aramid. Preferably, the composite strip 43 has a nylon reinforcement cord 48 located on each lateral edge of the strip having an 840/2 denier construction. Thus, the nylon reinforcement cord 48 is smaller in diameter than the first reinforcement cords. As shown in Figure 3, the lateral edge of each strip has a triangular shaped or pointed edge.

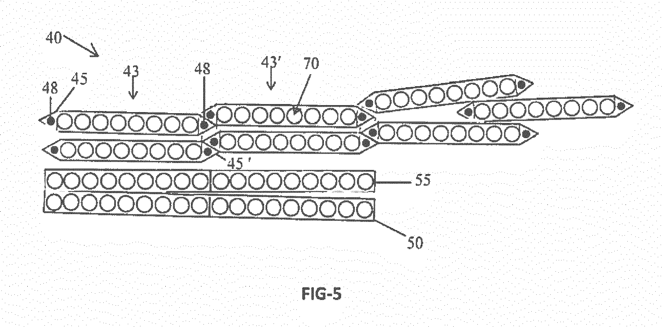

One half of a symmetrical belt package 40 for a tire 10 of the present invention is shown in Figure 5. The belt package 40 includes a first zigzag belt structure 70 formed from a composite strip 43 of the present invention. The zigzag belt structure 70 illustrates that a lateral triangular end 45' of a first composite strip 43' is stacked in mating engagement with the nearest lateral triangular end 45 of the adjacent strip 43. An optional low angle belt 50 is located radially inward of the zigzag belt 70. The low angle belt 50 is preferably formed of reinforcement cords forming an angle of 10 degrees or less with respect to the mid-circumferential plane, and more preferably, 5 degrees or less. Preferably, the first belt layer 50 is formed of a first rubberized strip of two or more cords made by spirally or helically winding the cords relative to the circumferential direction. The first belt layer 50 is preferably the narrowest belt structure of the belt package 40, and has a width in the range of from 13% to 100% of the rim width (width between flanges).

The belt package 40 may further optionally comprises a second belt layer 55 located radially outward of the first belt layer 50. The second belt layer 55 is preferably formed of cords having an angle of 10 degrees or less with respect to the mid-circumferential plane. Preferably, the second belt layer 55 is formed of a rubberized strip of two or more cords made by spirally or helically winding the cords relative to the circumferential direction. The second belt layer preferably has a width in the range of from 13% to 100% of the rim width. Preferably, the second belt layer 55 has a width the same or slightly greater than the first belt layer 50.

It is additionally preferred that the ply cords have a greater elongation at break than the belt cords elongation at break. The cord properties such as percent elongation at break, linear density and tensile strength are determined from cord samples taken after being dipped but prior to vulcanization of the tire.

The above described invention improves the burst strength of the tire by increasing the ratio of merged cords to nylon cords. The use of nylon cords at the edges of the strips provide a durability advantage, because Nylon is very forgiving and is utilized where the strain is highest (at the edge of the strip). However, the use of nylon results in a trade off in burst strength. The invention overcomes this disadvantage by providing for nylon reinforcements at the strip edge for durability, while at the same time increasing the ratio of merged cords to nylon cords, which increase the tire's burst strength.

## Claims

1. A pneumatic tire comprising a carcass (22) and a belt reinforcing structure (70), the belt reinforcing structure comprising a strip (43, 43') of reinforcement cords (44, 48) or being formed by winding a strip (43, 43') of reinforcement cords (44, 48), wherein the strip (43, 43') of reinforcement cords (44, 48) comprises or is formed from a plurality of first reinforcement cords (44) and at least one, preferably one, second reinforcement cord (48) located on each lateral end of the strip (43, 43'), wherein (i) the strip (43, 43') of reinforcement cords (44, 48) has outer lateral ends or edges (45, 45') that are triangular in shape and/or wherein (ii) at least one or all of the first reinforcement cords (44) have a larger diameter than at least one or all the second reinforcement cords (48), **characterized in that** the tire (10) is a radial aircraft tire, the first reinforcement cord (44) is formed of POK, aramid filaments or of aramid and nylon filaments, and the second reinforcement cord (48) is formed of nylon filaments, and wherein in case the first reinforcement cord (44) is formed of POK, the first reinforcement cord (44) is formed of a higher modulus material than the second reinforcement cord (48).

2. The tire of claim 1 wherein the outer lateral ends or edges (45, 45') have the shape of a tip pointing into the lateral direction.

3. The tire of claim 1 or 2 wherein the first reinforcement cord (44) is formed of a higher modulus material than the second reinforcement cord (48).

4. The tire of at least one of the previous claims wherein the first reinforcement cord (44) has a tangent modulus at 80% of breaking load greater than 5000 MPa and, preferably of less than 35000 MPa.

5. The tire of at least one of the previous claims wherein the second reinforcement cord (44) has a tangent modulus at 80% of breaking load less than 5000 MPa.

6. The tire of at least one of the previous claims wherein there are at least two second reinforcement cords (48) in a strip (43, 43'), and each second reinforcement cord (48) is located at each lateral end of the strip (43, 43').

7. The tire of claim 1 wherein the second reinforcement cord (48) is formed of nylon filaments having a 840/2 denier cord construction.

8. The tire of at least one of the previous claims wherein the strip (43, 43') has at least 9 reinforcement cords (44, 48).

9. The tire of at least one of the previous claims wherein the strip (43, 43') has a lateral width of in a range of from 5 mm to 25 mm, preferably 12.7 mm.

10. The tire of at least one of the previous claims wherein the strip (43, 43') has ends per 2.54 cm (epi) in a range of from 10 to 24, preferably 16 or 18.

11. The tire of at least one of the previous claims wherein the belt (70) is a zigzag wound belt.

12. The tire of at least one of the previous claims 1 to 12 wherein the belt (70) is a helically wound belt.

## Patentansprüche

1. Luftreifen, umfassend eine Karkasse (22) und eine Riemenverstärkungsstruktur (70), wobei die Riemenverstärkungsstruktur einen Streifen (43, 43') von Verstärkungskorden (44, 48) umfasst oder durch Wickeln eines Streifens (43, 43') von Verstärkungskorden (44, 48) ausgebildet wird, wobei der Streifen (43, 43') von Verstärkungskorden (44, 48) mehrere erste Verstärkungskorde (44) und wenigstens einen, bevorzugt einen, zweiten Verstärkungskord (48), der an jedem seitlichen Ende des Streifens (43, 43') gelegen ist, umfasst oder daraus ausgebildet wird, wobei (i) der Streifen (43, 43') von Verstärkungskorden (44, 48) äußere seitliche Enden oder Kanten (45, 45') aufweist, die eine dreieckige Form haben und/oder wobei (ii) wenigstens einer oder alle der ersten Verstärkungskorde (44) einen größeren Durchmesser aufweisen als wenigstens einer oder alle der zweiten Verstärkungskorde (48), **dadurch gekennzeichnet, dass** der Reifen (10) ein radialer Luftfahrzeugreifen ist, der erste Verstärkungskord (44) aus POK, Aramidfilamenten oder aus Aramid- und Nylonfilamenten ausgebildet wird und der zweite Verstärkungskord (48) aus Nylonfilamenten ausgebildet wird, und wobei, falls der erste Verstärkungskord (44) aus POK ausgebildet wird, der erste Verstärkungskord (44) aus einem Material mit höherem Modul als der zweite Verstärkungskord (48) ausgebildet wird.

2. Reifen nach Anspruch 1, wobei die äußeren seitlichen Enden oder Kanten (45, 45') die Form einer Spitze, die in die seitliche Richtung zeigt, aufweisen.

3. Reifen nach Anspruch 1 oder 2, wobei der erste Verstärkungskord (44) aus einem Material mit höherem Modul als der zweite Verstärkungskord (48) ausgebildet wird.

4. Reifen nach wenigstens einem der vorhergehenden Ansprüche, wobei der erste Verstärkungskord (44) bei 80 % Bruchlast ein Tangentenmodul von über 5000 MPa und bevorzugt von weniger als 35000 MPa aufweist.

5. Reifen nach wenigstens einem der vorhergehenden Ansprüche, wobei der zweite Verstärkungskord (44) bei 80 % Bruchlast ein Tangentenmodul von weniger als 5000 MPa aufweist.

6. Reifen nach wenigstens einem der vorhergehenden Ansprüche, wobei es wenigstens zwei zweite Verstärkungskorde (48) in einem Streifen (43, 43') gibt und jeder zweite Verstärkungskord (48) an jedem seitlichen Ende des Streifens (43, 43') gelegen ist.

7. Reifen nach Anspruch 1, wobei der zweite Verstärkungskord (48) aus Nylonfasern ausgebildet wird, die eine 840/2-Denier-Kordkonstruktion aufweisen.

8. Reifen nach wenigstens einem der vorhergehenden Ansprüche, wobei der Streifen (43, 43') wenigstens 9 Verstärkungskorde (44, 48) aufweist.

9. Reifen nach wenigstens einem der vorhergehenden Ansprüche, wobei der Streifen (43, 43') eine seitliche Breite in einem Bereich von 5 mm bis 25 mm, bevorzugt 12,7 mm aufweist.

10. Reifen nach wenigstens einem der vorhergehenden Ansprüche, wobei der Streifen (43, 43') Enden pro 2,54 cm (epi) in einem Bereich von 10 bis 24, bevorzugt 16 oder 18 aufweist.

11. Reifen nach wenigstens einem der vorhergehenden Ansprüche, wobei der Riemen (70) ein im Zickzack gewickelter Riemen ist.

12. Reifen nach wenigstens einem der vorhergehenden Ansprüche 1 bis 12, wobei der Riemen (70) ein schraubenförmig gewickelter Riemen ist.

## Revendications

1. Bandage pneumatique comprenant une carcasse (22) et une structure de renforcement de ceinture (70), la structure de renforcement de ceinture comprenant une bande (43, 43') de câblés de renforcement (44, 48) ou étant réalisée par l'intermédiaire de l'enroulement d'une bande (43, 43') de câblés de renforcement (44, 48) ; dans lequel la bande (43, 43') de câblés de renforcement (44, 48) comprend ou est réalisée à partir d'un certain nombre de premiers câblés de renforcement (44) et à partir d'au moins un, de préférence à partir d'un seul second câblé de renforcement (48) disposé sur chaque extrémité latérale de la bande (43, 43') ; dans lequel (i) la bande (43, 43') de câblés de renforcement (44, 48) possède des extrémités latérales externes ou des bords latéraux externes (45, 45') qui possèdent une configuration de forme triangulaire et/ou dans lequel (ii) au moins un ou la totalité des premiers câblés de renforcement (44) possède(nt) un diamètre supérieur à celui d'au moins un ou de tous les seconds câblés de renforcement (48) ; **caractérisé en ce que** le bandage pneumatique (10) représente un bandage pneumatique pour aéroplane du type à nappe radiale, le premier câblé de renforcement (44) est réalisé à partir de POK, de filaments d'aramide ou de filaments d'aramide et de nylon, et le second câblé de renforcement (48) est réalisé à partir de filaments de nylon ; et dans lequel, dans le cas où le premier câblé de renforcement (44) est réalisé à partir de POK, le premier câblé de renforcement (44) est réalisé à partir d'un matériau dont le module est supérieur à celui du second câblé de renforcement (48).

2. Bandage pneumatique selon la revendication 1, dans lequel les extrémités latérales externes ou les bords latéraux externes (45, 45') possèdent la configuration d'une extrémité de forme pointue qui pointe dans la direction latérale.

3. Bandage pneumatique selon la revendication 1 ou 2, dans lequel le premier câblé de renforcement (44) est réalisé à partir d'un matériau dont le module est supérieur à celui du second câblé de renforcement (48).

4. Bandage pneumatique selon au moins une des revendications précédentes, dans lequel le premier câblé de renforcement (44) possède un module de tangente, à 80 % de la charge de rupture, supérieur à 5.000 MPa, et de préférence inférieur à 35.000 MPa.

5. Bandage pneumatique selon au moins une des revendications précédentes, dans lequel le second câblé de renforcement (44) possède un module de tangente, à 80 % de la charge de rupture, inférieur à 5.000 MPa.

6. Bandage pneumatique selon au moins une des revendications précédentes, dans lequel on prévoit au moins deux seconds câblés de renforcement (48) dans une bande (43, 43'), et chaque second câblé de renforcement (48) est disposé à chaque extrémité latérale de la bande (43, 43').

7. Bandage pneumatique selon la revendication 1, dans lequel le second câblé de renforcement (48) est réalisé à partir de filaments en nylon possédant une structure de câblé du type de 840/2 deniers.

8. Bandage pneumatique selon au moins une des revendications précédentes, dans lequel la bande (43, 43') possède au moins 9 câblés de renforcement (44, 48).

9. Bandage pneumatique selon au moins une des revendications précédentes, dans lequel la bande (43, 43') possède une largeur latérale dans une plage de 5 mm à 25 mm, de préférence égale à 12,7 mm.

10. Bandage pneumatique selon au moins une des revendications précédentes, dans lequel la bande (43, 43') possède un nombre de bouts par 2,54 cm (epi) dans une plage de 10 à 24, de préférence égal à 16 ou 18.

11. Bandage pneumatique selon au moins une des revendications précédentes, dans lequel la ceinture (70) représente une ceinture enroulée en zigzag.

12. Bandage pneumatique selon au moins une des revendications précédentes 1 à 12, dans lequel la ceinture (70) représente une ceinture à enroulement hélicoïdal.
